# EUROPÄISCHE PATENTANMELDUNG

(11) **EP 4 397 543 A1**
(43) Veröffentlichungstag der Anmeldung: **10.07.2024**
(21) Anmeldenummer: 23150656.9
(22) Anmeldetag: 09.01.2023
(51) Int. Cl.: B60Q 1/08, B60Q 1/115

(54) **VERFAHREN UND VORRICHTUNG ZUR PROJEKTION EINER LICHTVERTEILUNG IN DIE UMGEBUNG EINES FAHRZEUGS**

(71) Anmelder: Volkswagen Aktiengesellschaft, 38436 Wolfsburg (DE)
(72) Erfinder: LAMPE, Sebastian, 49205 Hasbergen (DE); SCHLEUSNER, Jens Karsten, 30519 Hannover (DE)

(57) **Zusammenfassung**

Die vorliegende Erfindung betrifft ein Verfahren zur Projektion einer Lichtverteilung in die Umgebung eines Fahrzeugs (1). Ferner betrifft die Erfindung eine Vorrichtung zur Projektion einer Lichtverteilung in die Umgebung eines Fahrzeugs (1) mit einer Sensoreinheit, die ausgebildet ist, Bewegungsdaten des Fahrzeugs und/oder Umgebungsdaten des Fahrzeugs (1) zu einem ersten Zeitpunkt zu erfassen, einen Speicher (5) zum Speichern einer Soll-Lichtverteilung, einer Recheneinheit (4) zum Erzeugen von Projektionsdaten aus der gespeicherten Soll-Lichtverteilung und einem Lichtprojektor (12), der ausgebildet ist, eine Lichtverteilung in die Umgebung des Fahrzeugs (1) zu projizieren.

## Beschreibung

Die vorliegende Erfindung betrifft ein Verfahren zur Projektion einer Lichtverteilung in die Umgebung eines Fahrzeugs. Ferner betrifft die Erfindung eine Vorrichtung zur Projektion einer Lichtverteilung in die Umgebung eines Fahrzeugs mit einer Sensoreinheit, die ausgebildet ist, Bewegungsdaten des Fahrzeugs und/oder Umgebungsdaten des Fahrzeugs zu einem ersten Zeitpunkt zu erfassen, einen Speicher zum Speichern einer Soll-Lichtverteilung, einer Recheneinheit zum Erzeugen von Projektionsdaten aus der gespeicherten Soll-Lichtverteilung und einem Lichtprojektor, der ausgebildet ist, eine Lichtverteilung in die Umgebung des Fahrzeugs zu projizieren.

Es ist bekannt, Lichtverteilungen in die Umgebung eines Fahrzeugs zu projizieren, welche Grafiken darstellen. Bei der Projektion solcher Lichtgrafiken können fahrdynamische Bewegungen des Fahrzeugs ausgeglichen werden, um zu jeder Zeit eine perspektivisch korrekte und präzise Überlagerung dieser Lichtgrafiken mit der Umgebung, insbesondere der Projektionsfläche, sicherzustellen. Der Ausgleich sollte mit einer sehr hohen Bild-Wiederholrate (Frequenz) in einer geringen Latenz (Verzögerung) erfolgen. Die Lichtgrafiken werden üblicherweise in einem Hardware-Rendering-System mit einem Grafikprozessor berechnet. Diese Umsetzung ist jedoch wegen des Einsatzes des Hardware-Rendering-Systems mit dem Grafikprozessor kostenintensiv. Außerdem muss in diesem Fall die Dateninfrastruktur zum Übertragen von Bilddaten an das Lichtsteuergerät für eine sehr hohe Bandbreite und sehr hohe Übertragungsraten ausgelegt werden. Beispielsweise werden in diesem Fall Leitungen für eine Hochgeschwindigkeits-Datenübertragung (LVDS, Low-Voltage-Differential-Signaling) eingesetzt, welche die Kosten des Systems erhöhen.

Beispielsweise ist aus der DE 10 2019 217 978 A1 ein Verfahren zur Projektion von Lichtverteilungen mittels eines Lichtverteilungssystems eines Fahrzeugs bekannt, bei dem die von einer Sensoreinheit ermittelten Lagedaten des Fahrzeugs zur Korrektur von Projektionsdaten für einen Lichtprojektor verwendet werden.

Der vorliegenden Erfindung liegt die Aufgabe zugrunde, ein Verfahren und eine Vorrichtung bereitzustellen, bei denen gar keine oder eine geringe Abweichung der projizierten Lichtverteilung von einer gewünschten Soll-Lichtverteilung auftritt.

Erfindungsgemäß wird diese Aufgabe durch ein Verfahren mit den Merkmalen des Anspruchs 1 und eine Vorrichtung mit den Merkmalen des Anspruchs 10 gelöst. Vorteilhafte Ausgestaltungen und Weiterbildungen ergeben sich aus den abhängigen Ansprüchen.

Bei dem erfindungsgemäßen Verfahren werden zu einem ersten Zeitpunkt Bewegungsdaten des Fahrzeugs und/oder Umgebungsdaten des Fahrzeugs erfasst. Aus den erfassten Bewegungsdaten und/oder den erfassten Umgebungsdaten werden prädizierte Lagedaten für einen späteren zweiten Zeitpunkt berechnet. Aus einer gespeicherten Soll-Lichtverteilung werden Projektionsdaten für einen Lichtprojektor erzeugt. Die erzeugten Projektionsdaten werden mittels der prädizierten Lagedaten korrigiert, so dass korrigierte Projektionsdaten erzeugt werden. Schließlich projiziert der Lichtprojektor zum zweiten Zeitpunkt auf Basis der korrigierten Projektionsdaten eine Lichtverteilung in die Umgebung des Fahrzeugs.

Unter einer projizierten Lichtverteilung oder einer Projektion einer Lichtverteilung wird hier die Art und Weise der Verteilung des Lichts auf eine Projektionsfläche oder im dreidimensionalen Raum verstanden. Die Lichtverteilung ist demzufolge insbesondere die Verteilung des Scheinwerferlichts zur zweckmäßigen Ausleuchtung der Fahrbahn, um die Sicht des Fahrers zu verbessern, jedoch Blendungen des Gegenverkehrs zu vermeiden. In die Lichtverteilung eingeschlossen ist hierbei auch eine Verteilung des Lichtes in unterschiedlicher Helligkeit und Farbe zur Darstellung von Grafiken, insbesondere zeichenhaften Darstellungen, zum Beispiel Leitlinien, Pfeile, Zebrastreifen, Symbole, auf der Fahrbahn, auf anderen Projektionsflächen oder im dreidimensionalen Raum. Die Soll-Lichtverteilung ist dabei eine in einem zweckmäßigen Datenformat hinterlegte gewünschte Lichtverteilung. Die Soll-Lichtverteilung, insbesondere eine enthalten Lichtgrafik, kann dabei in Abhängigkeit vom Fahrbahnverlauf und der Verkehrssituation variieren.

Erfindungsgemäß wurde erkannt, dass die Abweichung der projizierten Lichtverteilung von einer erwünschten Soll-Lichtverteilung unter anderem dadurch erzeugt wird, dass die verwendeten Lagedaten des Fahrzeugs zur Korrektur der Projektionsdaten zum Zeitpunkt der Lichtemission nicht mehr aktuell sind. Der Grund hierfür liegt in der Latenz zwischen dem Erfassen der Lagedaten und der Lichtemission durch den Lichtprojektor. Diese Latenz kann auch als *Motion-to-Photon-Latency* bezeichnet werden. Mit dem erfindungsgemäßen Verfahren wird somit vorteilhafterweise eine bessere Anpassung der projizierten Lichtverteilung an veränderte Ausrichtungen, d. h. Posen, des Fahrzeugs erreicht. Die Veränderung der Ausrichtung des Fahrzeugs kann beispielsweise aufgrund von translatorischen oder rotierenden Bewegungen, wie beispielsweise Nick-, Wank- und Gierbewegungen erfolgen. Bei der Bewegung des Fahrzeugs überlagern sich insbesondere die translatorischen und rotierenden Bewegungen.

Die Lagedaten des Fahrzeugs umfassen insbesondere Abweichungen der Ausrichtung des Fahrzeugs relativ zu einer Standardausrichtung bzw. einer Standardlage oder Standardpose des Fahrzeugs. Die Standardausrichtung des Fahrzeugs ist insbesondere die Ausrichtung des Fahrzeugs auf einer ebenen, horizontal ausgerichteten Fahrbahn, wobei die Längsachse des Fahrzeugs parallel zur Fahrtrichtung des Fahrzeugs ausgerichtet ist. Die Lagedaten geben insbesondere die Verdrehungen des Fahrzeugs relativ zu der Standardausrichtung an. Sie können beispielsweise Winkelabweichungen von der Standardausrichtung hinsichtlich der Längsachse (x-Achse), der Querachse (y-Achse) und/oder der Vertikalachse (z-Achse) enthalten.

Die Umgebungsdaten umfassen insbesondere Informationen zum Fahrbahnverlauf in Fahrtrichtung. Es werden insbesondere geometrische Änderungen der Fahrbahn berücksichtigt, die zu Lageänderungen des Fahrzeugs, insbesondere Verdrehungen des Fahrzeugs, führen werden. Solche geometrischen Änderungen der Fahrbahn sind beispielsweise Neigungen der Fahrbahn oder Veränderungen des Fahrbahnverlaufs, welche zu Kräften führen, die auf das Fahrzeug beim Befahren der Fahrbahn wirken. Diese Kräfte führen insbesondere zu Verdrehungen des Fahrzeugs um die drei Fahrzeugachsen.

Bei dem erfindungsgemäßen Verfahren können diese Umgebungsdaten zur Berechnung der prädizierten Lagedaten des Fahrzeugs verwendet werden. Es wird somit eine Vorhersage getroffen, wie sich die Ausrichtung des Fahrzeugs verändern wird, wenn das Fahrzeug den mittels der Umgebungsdaten erfassten Fahrbahnverlauf befährt. Unter Berücksichtigung der aktuellen und/oder zukünftigen Geschwindigkeit des Fahrzeugs werden die prädizierten Lagedaten für den späteren zweiten Zeitpunkt unter Berücksichtigung dieser Umgebungsdaten berechnet.

Gemäß einer Ausgestaltung des erfindungsgemäßen Verfahrens ist der zweite Zeitpunkt der Zeitpunkt, zu dem die Lichtverteilung mit denjenigen korrigierten Projektionsdaten projiziert wird, die mittels der zum ersten Zeitpunkt erfassten Bewegungsdaten und/oder Umgebungsdaten berechnet wurden. Vorteilhafterweise wird beim Berechnen der korrigierten Projektionsdaten die Latenz zwischen dem Erfassen der Bewegungsdaten und/oder Umgebungsdaten und der Projektion der Lichtverteilung berücksichtigt.

Gemäß einer weiteren Ausgestaltung des erfindungsgemäßen Verfahrens wird bei der Berechnung der prädizierten Lagedaten die Position des Fahrzeugs zu dem zweiten Zeitpunkt berechnet. Aus der Position des Fahrzeugs lässt sich insbesondere unter Berücksichtigung der Geometrie der Fahrbahn die Ausrichtung des Fahrzeugs zu dem zweiten Zeitpunkt bestimmen, zu dem die Lichtverteilung projiziert wird. Vorteilhafterweise lässt sich hierdurch eine etwaige Abweichung zwischen der gewünschten Soll-Lichtverteilung und der projizierten Lichtverteilung verringern.

Vorteilhafterweise wird außerdem eine bereits zum ersten Zeitpunkt beim Erfassen der Bewegungsdaten erfasste Verdrehung des Fahrzeugs zusätzlich erfasst und bei der Berechnung der prädizierten Lagedaten berücksichtigt. Es wird somit auch die Ausrichtung des Fahrzeugs zum ersten Zeitpunkt erfasst.

Wird mittels der Umgebungsdaten beispielsweise erkannt, dass sich die Neigung der Fahrbahn erhöht, wird eine Nickbewegung um die Querachse des Fahrzeugs vorhergesagt. Aus der Geschwindigkeit des Fahrzeugs und der Latenz zwischen dem Erfassen der Bewegungsdaten und der Projektion der Lichtverteilung kann der zweite Zeitpunkt berechnet werden. Außerdem kann die Position des Fahrzeugs auf der Fahrbahn zu diesem zweiten Zeitpunkt berechnet werden. Auf diese Weise kann die Ausrichtung des Fahrzeugs bei dieser Position unter Berücksichtigung der Nickbewegung zu diesem zweiten Zeitpunkt berechnet werden. Auf diese Weise können prädizierte Lagedaten berechnet werden.

Gemäß einer Ausgestaltung des erfindungsgemäßen Verfahrens werden aus den Umgebungsdaten ferner Daten zu Verkehrssituationen bestimmt. Aus diesen Daten zu einer erfassten Verkehrssituation können Veränderungen der Ausrichtung, d. h. der Lage des Fahrzeugs, aufgrund von bevorstehenden Fahrmanövern berechnet werden. Bei der Berechnung der prädizierten Lagedaten wird gemäß dieser Ausgestaltung ferner eine Veränderung der Ausrichtung des Fahrzeugs durch ein vorhergesagtes Fahrmanöver berücksichtigt.

Beispielsweise führt ein bevorstehendes Abbremsen oder positives Beschleunigen des Fahrzeugs zu einer Nickbewegung des Fahrzeugs. Solche bevorstehenden Beschleunigungen können vorhergesagt werden, um die prädizierten Lagedaten für den zweiten Zeitpunkt zu berechnen. Des Weiteren kann ein bevorstehendes Ausweichmanöver zu einer Wankbewegung des Fahrzeugs führen. Mittels der Umgebungsdaten kann ein solches Manöver vorhergesagt werden und bei der Berechnung der prädizierten Lagedaten berücksichtigt werden.

Gemäß einer Ausgestaltung des erfindungsgemäßen Verfahrens wird aus den prädizierten Lagedaten eine prädizierte Orientierung des Lichtprojektors berechnet und die Projektionsdaten werden mittels der prädizierten Orientierung des Lichtprojektors korrigiert. Die Veränderung der Ausrichtung des Fahrzeugs wirkt sich direkt auf die Orientierung des Lichtprojektors aus, da dieser fest im Fahrzeug befestigt ist. Erfindungsgemäß können somit die Lagedaten des Fahrzeugs in eine Orientierung des Lichtprojektors umgerechnet werden. Somit können auch die prädizierten Lagedaten des Fahrzeugs in eine prädizierte Orientierung des Lichtprojektors umgerechnet werden. Diese prädizierte Orientierung kann dann bei der Korrektur der Projektionsdaten berücksichtigt werden.

Gemäß einer weiteren Ausgestaltung des erfindungsgemäßen Verfahrens werden die Bewegungsdaten für das Fahrzeug mittels Fahrwerkssensoren und/oder Inertialsensoren berechnet. Vorteilhafterweise können hierdurch besonders präzise Bewegungsdaten zum ersten Zeitpunkt gewonnen werden.

Gemäß einer Weiterbildung des erfindungsgemäßen Verfahrens werden die Bewegungsdaten und/oder die Umgebungsdaten mit einer ersten Frequenz gewonnen und die korrigierten Projektionsdaten werden mit einer zweiten Frequenz erzeugt, wobei die erste Frequenz größer als die zweite Frequenz ist. Bis zum Erzeugen der korrigierten Projektionsdaten werden bei dieser Weiterbildung zu einem Zwischenzeitpunkt, der zwischen dem ersten und dem zweiten Zeitpunkt liegt, aktualisierte Bewegungsdaten des Fahrzeugs und/oder aktualisierte Umgebungsdaten des Fahrzeugs erfasst. Aus den aktualisierten Bewegungsdaten und/oder den aktualisierten Umgebungsdaten werden dann aktualisierte prädizierte Lagedaten für den späteren zweiten Zeitpunkt berechnet. Aus der Abweichung der aktualisierten prädizierten Lagedaten von den prädizierten Lagedaten wird dann ein Korrekturparameter für die Projektionsdaten berechnet. Vor der Projektion der Lichtverteilung werden dann aus den korrigierten Projektionsdaten und dem Korrekturparameter aktualisierte korrigierte Projektionsdaten berechnet. Der Lichtprojektor projiziert dann zum zweiten Zeitpunkt auf Basis der aktualisierten korrigierten Projektionsdaten die Lichtverteilung in die Umgebung des Fahrzeugs. Durch die Aktualisierung der prädizierten Lagedaten wird das Zeitintervall zwischen dem ersten und dem zweiten Zeitpunkt insbesondere nicht verändert, sodass vorteilhafterweise Veränderungen der Bewegung des Fahrzeugs unmittelbar vor der Projektion der Lichtverteilung berücksichtigt werden können.

Vorteilhafterweise werden bei dieser Weiterbildung die aus der Soll-Lichtverteilung ursprünglich gewonnenen Projektionsdaten auf zweifache Weise korrigiert: Zum einen wird eine Vorhersage der Ausrichtung des Fahrzeugs zu dem zweiten Zeitpunkt mittels der prädizierten Lagedaten zur Korrektur der Projektionsdaten verwendet. Zum anderen wird ausgenutzt, dass die Bewegungsdaten häufiger erfasst werden als die korrigierten Projektionsdaten erzeugt werden können. Wenn die korrigierten Projektionsdaten erzeugt worden sind, liegen bereits aktuellere Bewegungsdaten vor als die Bewegungsdaten, die bei der Korrektur der Projektionsdaten berücksichtigt wurden. Gleiches gilt für die Umgebungsdaten. Für die aktualisierten Bewegungsdaten und/oder die aktualisierten Umgebungsdaten können sehr schnell aktualisierte prädizierte Lagedaten für das Fahrzeug für den zweiten Zeitpunkt berechnet werden. Die Abweichung dieser aktualisierten prädizierten Lagedaten von den prädizierten Lagedaten, welche bei der Korrektur der Projektionsdaten verwendet wurden, führt zu dem Korrekturparameter. Das Zeitintervall zur Berechnung von korrigierten Projektionsdaten ist länger als das Zeitintervall zum Erfassen der Bewegungsdaten und/oder Umgebungsdaten, da das Erzeugen der Projektionsdaten aus der Soll-Lichtverteilung rechenintensiv ist. Die Anwendung des Korrekturparameters auf die bereits korrigierten Projektionsdaten kann jedoch innerhalb eines sehr kurzen Zeitintervalls erfolgen, so dass die korrigierten Projektionsdaten mittels des Korrekturparameters vor der Projektion der Lichtverteilung nochmals aktualisiert werden können. Hierdurch kann die Abweichung der projizierten Lichtverteilung von der gewünschten Soll-Lichtverteilung noch weiter reduziert werden.

Die erste Frequenz, mit der die Bewegungsdaten bzw. die Umgebungsdaten gewonnen werden, kann insbesondere einer Echtzeitdatenerfassung im Fahrzeug entsprechen. Der Korrekturparameter kann insbesondere eine Verschiebung der Lichtverteilung bewirken. Es handelt sich insbesondere um eine mittlere vertikale Bildverschiebung zwischen einer Lichtprojektion bei der letzten und der aktuellen Ausrichtung des Fahrzeugs. Eine solche Bildverschiebung kann mit geringstem Rechenaufwand durch einen einfachen Speicherzugriff auf die bereits vorliegenden korrigierten Projektionsdaten zum Erzeugen der aktualisierten korrigierten Projektionsdaten umgesetzt werden. Beispielsweise kann der Speicherzugriff an einer aus dem Korrekturparameter abgeleiteten Speicheradresse relativ zu den bereits vorliegenden korrigierten Projektionsdaten erfolgen. Die Anwendung des Korrekturparameters erfolgt dabei insbesondere kurz vor der Projektion der Lichtverteilung, wobei insbesondere nur eine vertikale Verschiebung der Lichtverteilung angewendet wird.

Gemäß einer weiteren Ausgestaltung des erfindungsgemäßen Verfahrens werden die korrigierten Projektionsdaten über eine Datenleitung an ein Lichtsteuergerät des Lichtprojektors übertragen. Vor der Projektion der korrigierten Projektionsdaten wird dann der Korrekturparameter an das Lichtsteuergerät übertragen. Das Lichtsteuergerät berechnet dann die aktualisierten korrigierten Projektionsdaten und steuert den Lichtprojektor auf Basis der aktualisierten korrigierten Projektionsdaten an. Vorteilhafterweise werden in diesem Fall das Erzeugen der Projektionsdaten, d. h. das Rendering, und die Aktualisierung der daraus gewonnenen Projektionsdaten, örtlich voneinander getrennt. Zum Aktualisieren der korrigierten Projektionsdaten muss somit nur der Korrekturparameter über die Datenleitung übertragen werden, und nicht die aktualisierten korrigierten Projektionsdaten; letztere werden im Lichtsteuergerät berechnet. Vorteilhafterweise ergibt sich hieraus eine Erhöhung der Wiederholfrequenz des Lichtprojektors, ohne dass die Bandbreite der Datenleitung erhöht werden müsste. Außerdem ergibt sich eine Reduktion der Latenz auf z. B. wenige Millisekunden, da die bereits korrigierten Projektionsdaten erst unmittelbar vor der Projektion nochmals aktualisiert werden.

Gemäß einer Weiterbildung des erfindungsgemäßen Verfahrens wird zusätzlich zu der von dem Lichtprojektor projizierten Lichtverteilung eine Grundlichtfunktion mittels eines Scheinwerfermoduls erzeugt, die der projizierten Lichtverteilung überlagert ist. Vorteilhafterweise kann hierdurch die Lichtverteilung in eine Grundlichtfunktion projiziert werden, so dass die projizierte Lichtverteilung für den Fahrer und/oder andere Verkehrsteilnehmer besser wahrnehmbar ist. Bei der Grundlichtfunktion kann es sich beispielsweise um ein Abblendlicht, ein Fernlicht, ein maskiertes Dauerfernlicht oder eine andere Lichtverteilung eines Scheinwerfers handeln, mit welcher die Fahrbahn in Fahrtrichtung des Fahrzeugs für eine bessere Sicht des Fahrers ausgeleuchtet werden soll.

Die Grundlichtfunktion kann durch die prädizierten Lagedaten für das Fahrzeug korrigiert werden. In diesem Fall wird eine korrigierte Grundlichtfunktion mittels der prädizierten Lagedaten erzeugt. Alternativ kann die Grundlichtfunktion auch durch zum ersten Zeitpunkt aufgenommene Lagedaten, und nicht durch die prädizierten Lagedaten, korrigiert werden. Dies ist vorteilhaft, da die Latenzzeit zum Erzeugen der korrigierten Grundlichtfunktion in diesem Fall geringer ist. Alternativ bleibt die Grundlichtfunktion unabhängig von den erfassten Lagedaten und/oder Bewegungsdaten des Fahrzeugs. Es werden in diesem Fall nur die Projektionsdaten für den Lichtprojektor auf Basis der prädizierten Lagedaten korrigiert.

Gemäß einer Weiterbildung des erfindungsgemäßen Verfahrens wird für die Grundlichtfunktion mittels des Korrekturparameters eine korrigierte Grundlichtfunktion berechnet, und das Scheinwerfermodul emittiert zum zweiten Zeitpunkt die korrigierte Grundlichtfunktion. Hierdurch kann nicht nur die projizierte Lichtverteilung, sondern auch die Grundlichtfunktion auf einfache Weise ohne längere Latenz korrigiert werden. Die Berechnung mittels des Korrekturparameters kann auf die gleiche Weise erfolgen, wie die Berechnung der aktualisierten korrigierten Projektionsdaten. Es ist jedoch alternativ möglich, dass die Berechnung der korrigierten Grundlichtfunktion mittels des Korrekturparameters auf andere Weise erfolgt als bei den Projektionsdaten. Die von den Projektionsdaten erzeugte Lichtverteilung kann beispielsweise um einen anderen Wert verschoben werden als die Grundlichtfunktion, insbesondere kann eine andere vertikale Verschiebung umgesetzt werden.

Die prädizierten Lagedaten umfassen insbesondere einen prädizierten Schwenkwinkel des Fahrzeugs um die Querachse zu dem späteren zweiten Zeitpunkt. Es wird somit vorteilhafterweise eine Nickbewegung des Fahrzeugs erfasst und der Nickwinkel für den zweiten Zeitpunkt vorhergesagt, um die Projektionsdaten zu korrigieren. Dies ist insbesondere vorteilhaft, wenn das Fahrzeug eine Kuppe oder Schwellen überfährt oder wenn negative oder positive Beschleunigungen des Fahrzeugs vorhergesagt werden, da diese zu Nickbewegungen des Fahrzeugs führen.

Die Projektion der Lichtverteilung kann in den dreidimensionalen Raum erfolgen. Sie ist in diesem Fall beispielsweise bei hoher Luftfeuchtigkeit oder Nebel sichtbar. Insbesondere erfolgt die Projektion jedoch auf eine Fläche, beispielsweise auf die Fahrbahn, insbesondere auf Abschnitte der Fahrbahn in Fahrtrichtung des Fahrzeugs.

Gemäß einer Ausgestaltung des erfindungsgemäßen Verfahrens wird die Ausrichtung einer Projektionsfläche erfasst, auf welche die Lichtverteilung zu projizieren ist. Beim Erzeugen der korrigierten Projektionsdaten wird in diesem Fall aus der Soll-Lichtverteilung eine perspektivische Verzerrung der Projektionsdaten realisiert, um die Soll-Lichtverteilung unverzerrt auf die Projektionsfläche zu projizieren.

Die Soll-Lichtverteilung ist mittels Lichtprojektor-kompatiblen Projektionsdaten gespeichert, wobei bei der Soll-Lichtverteilung davon ausgegangen wird, dass sich das Fahrzeug in einer Standardausrichtung befindet und die Lichtprojektion auf eine Standardfläche erfolgt, beispielsweise auf eine ebene horizontale Fläche vor dem Fahrzeug. Ist die Geometrie der Projektionsfläche anders als die Standardprojektionsfläche, ist beispielsweise die Projektionsfläche insgesamt anders ausgerichtet oder weist die Projektionsfläche Krümmungen auf, so dass verschiedene Bereiche der Projektionsfläche unterschiedlich ausgerichtet sind, ist diese Ausrichtung beim Erzeugen der Projektionsdaten zu berücksichtigen, damit die auf die Projektionsfläche projizierte Lichtverteilung für den Betrachter so erscheint wie die gewünschte Soll-Lichtverteilung. Erfindungsgemäß wird dies durch eine perspektivische Verzerrung der Projektionsdaten realisiert. Die perspektivische Verzerrung kann beispielsweise sehr effizient als Abtastungsprozess berechnet werden. Die Berechnung ist in diesem Fall insbesondere effizienter als ein dreidimensionales Rendering der Projektionsdaten.

Bei dem erfindungsgemäßen Verfahren werden die auf diese Weise erzeugten Projektionsdaten jedoch nochmals korrigiert, wenn die Lage des Fahrzeugs relativ zur Projektionsfläche von der Standardausrichtung bzw. einer Standardlage abweicht. Die Berücksichtigung von Lagedaten des Fahrzeugs und der Orientierung des Lichtprojektors ist an sich bekannt. Bei dem erfindungsgemäßen Verfahren werden die Projektionsdaten jedoch mittels prädizierter Lagedaten korrigiert, welche die voraussichtliche Lage des Fahrzeugs, und damit des Lichtprojektors, zum Zeitpunkt der tatsächlichen Projektion der Lichtverteilung, berücksichtigen. Vorteilhafterweise wird hierdurch eine sehr genaue Projektion der gewünschten Soll-Lichtverteilung auf eine Projektionsfläche realisiert.

Die eingangs beschriebene erfindungsgemäße Vorrichtung zur Projektion einer Lichtverteilung in die Umgebung eines Fahrzeugs ist dadurch gekennzeichnet, dass sie eine mit der Sensoreinheit gekoppelte Prädiktionseinheit aufweist, die ausgebildet ist, prädizierte Lagedaten für einen späteren zweiten Zeitpunkt aus den erfassten Bewegungsdaten und/oder den erfassten Umgebungsdaten zu berechnen. Ferner weist die Vorrichtung eine mit der Recheneinheit und der Prädiktionseinheit gekoppelte Korrektureinheit auf, die ausgebildet, die erzeugten Projektionsdaten mittels der prädizierten Lagedaten zu korrigieren, so dass korrigierte Projektionsdaten erzeugt werden. Der Lichtprojektor ist bei der erfindungsgemäßen Vorrichtung ausgebildet, zum zweiten Zeitpunkt auf Basis der korrigierten Projektionsdaten die Lichtverteilung in die Umgebung des Fahrzeugs zu projizieren.

Die erfindungsgemäße Vorrichtung ist insbesondere ausgebildet, das erfindungsgemäße Verfahren auszuführen. Es weist daher dieselben Vorteile auf.

Die Sensoreinheit ist in einer Ausführung als inertiale Messeinheit ausgebildet. Eine inertiale Messeinheit besteht aus mehreren Inertialsensoren, wie beispielsweise Beschleunigungssensoren und Drehratensensoren, die zusammen ein Trägheitsnavigationssystem bilden.

Alternativ oder zusätzlich kann die Sensoreinheit ein optisches Kamera-System, wie beispielsweise eine Time-of-Flight Kamera, eine Stereokamera, ein Dynamic-Vision-Sensor oder ein Neuromorphic-Sensor umfassen. Aus den vom optischen Kamera-System ermittelten Daten können mittels Algorithmen die Bewegungen des Fahrzeugs vorteilhaft berechnet werden.

Alternativ oder zusätzlich kann die Sensoreinheit auch einen Geschwindigkeitsmesser des Fahrzeugs umfassen.

Alternativ oder zusätzlich kann die Sensoreinheit ein Projektor-Kamera-System umfassen, das mittels Musterprojektion ein dynamisches 3D Modell der Umgebung generiert. Aus dem dynamischen 3D Modell kann die relative Lage des Fahrzeugs, seine Eigenbewegung und die Geometrie der Fahrbahn abgeleitet werden, so dass die prädizierten Lagedaten des Fahrzeugs, die Geometrie der Fahrbahn zum zweiten Zeitpunkt und/oder die Geometrie der Projektionsfläche vorteilhaft berechnet werden können.

Weiterhin können mehrere Sensoreinheiten, wie beispielsweise Inertialsensoren und Kamerasysteme, gemeinsam mit den Fahrzeugdaten, wie zum Beispiel Geschwindigkeit und Lenkwinkel, zusammengeführt werden.

Gemäß einer Weiterbildung der erfindungsgemäßen Vorrichtung ist die Korrektureinheit ausgebildet, die Projektionsdaten mit einer zweiten Frequenz zu erzeugen, und die Sensoreinheit ist ausgebildet, Bewegungsdaten mit einer ersten Frequenz zu gewinnen, wobei die erste Frequenz größer als die zweite Frequenz ist. Ferner ist die Sensoreinheit ausgebildet, bis zum Erzeugen der korrigierten Projektionsdaten zu einem Zwischenzeitpunkt, der zwischen dem ersten und dem zweiten Zeitpunkt liegt, aktualisierte Bewegungsdaten des Fahrzeugs und/oder aktualisierte Umgebungsdaten des Fahrzeugs zu erfassen. Die Prädiktionseinheit ist dann ausgebildet, aus den aktualisierten Bewegungsdaten und/oder den aktualisierten Umgebungsdaten aktualisierte prädizierte Lagedaten für den späteren zweiten Zeitpunkt zu berechnen. Die Korrektureinheit ist bei dieser Ausgestaltung ausgebildet, aus der Abweichung der aktualisierten prädizierten Lagedaten von den prädizierten Lagedaten einen Korrekturparameter für die Projektionsdaten zu berechnen. Vor der Projektion der Lichtverteilung sind dann aus den korrigierten Projektionsdaten und dem Korrekturparameter aktualisierte korrigierte Projektionsdaten berechenbar. Der Lichtprojektor ist in diesem Fall ausgebildet, zum zweiten Zeitpunkt auf Basis der aktualisierten korrigierten Projektionsdaten eine Lichtverteilung in die Umgebung des Fahrzeugs zu projizieren.

Vorteilhafterweise kann bei dieser Ausgestaltung eine weitere Korrektur über den Korrekturparameter erfolgen, wobei die verschiedenen Frequenzen beim Erfassen der Bewegungsdaten bzw. Umgebungsdaten und zum Erzeugen der Projektionsdaten ausgenutzt werden, um die korrigierten Projektionsdaten nochmals mittels des Korrekturparameters zu aktualisieren. Auf diese Weise kann eine noch präzisere Projektion der Soll-Lichtverteilung in die Umgebung des Fahrzeugs erreicht werden.

Gemäß einer Weiterbildung der erfindungsgemäßen Vorrichtung ist bei dem Lichtprojektor ein Lichtsteuergerät angeordnet, welches ausgebildet ist, eine oder mehrere Lichtquellen des Lichtprojektors anzusteuern. Die Prädiktionseinheit, die Recheneinheit und die Korrektureinheit können insbesondere in einer zentralen Steuereinheit angeordnet sein, die über eine Datenleitung mit dem Lichtsteuergerät gekoppelt ist. Das Lichtsteuergerät ist dann ausgebildet, die aktualisierten korrigierten Projektionsdaten zu berechnen und an die eine oder mehreren Lichtquellen des Lichtprojektors zu übertragen. Hierdurch wird vorteilhafterweise erreicht, dass die Bandbreite der Datenleitung durch die Übertragung der aktualisierten korrigierten Projektionsdaten nicht erhöht werden muss, da zusätzlich zu den bereits übertragenen korrigierten Projektionsdaten nur der Korrekturparameter übertragen wird, welcher dann im Lichtsteuergerät auf die korrigierten Projektionsdaten angewendet wird, um die aktualisierten korrigierten Projektionsdaten zu erzeugen. Hierdurch kann ferner die Systemlatenz reduziert werden, da die aktualisierten korrigierten Projektionsdaten unmittelbar vor der Übertragung dieser Projektionsdaten an die Lichtquellen berechnet werden.

Die vorliegende Erfindung betrifft außerdem ein Fahrzeug mit zwei Scheinwerfereinheiten, die jeweils ein Scheinwerfermodul und eine der vorstehend beschriebenen Vorrichtungen umfassen. Die Scheinwerfermodule sind insbesondere ausgebildet, eine Grundlichtfunktion, wie ein Abblendlicht und ein Fernlicht oder eine andere Funktion eines Scheinwerfers zu erzeugen. Die Scheinwerfermodule können LED-Module, hochauflösende Mikropixel-Module oder sogenannte DMD (Digital Micromirror Device)-Module sein.

Die Grundlichtfunktion kann, wie vorstehend erläutert, auch korrigiert werden, und zwar analog zu der projizierten Lichtverteilung oder unabhängig von der projizierten Lichtverteilung. Ferner kann die projizierte Lichtverteilung auch innerhalb einer statischen Grundlichtfunktion verändert werden, so dass die Grundlichtfunktion nicht verändert wird.

Mittels eines hochauflösenden Pixel-Scheinwerfers kann auch sowohl die Grundlichtfunktion, als auch die projizierte Lichtverteilung erzeugt werden. Dabei kann die projizierte Lichtverteilung separat von der Grundlichtfunktion erzeugt werden und erst im Lichtsteuergerät kann dann die projizierte Lichtverteilung der hochauflösenden Grundlichtfunktion überlagert werden.

Gemäß einer Ausgestaltung des erfindungsgemäßen Fahrzeugs sind die Scheinwerfereinheiten in Querrichtung beabstandet voneinander angeordnet, und die Lichtprojektoren der zwei Scheinwerfereinheiten sind ausgebildet, die projizierte Lichtverteilung durch Überlagerung der Lichtemissionen der beiden Lichtprojektoren zu erzeugen. In diesem Fall ist es durch die Korrektur der Projektionsdaten möglich, die projizierten Lichtverteilungen der beiden Lichtprojektoren so zu überlagern, dass sich keine Doppelbilder ergeben.

Im Folgenden werden Ausführungsbeispiele der Erfindung mit Bezug zu den Zeichnungen erläutert:
- Fig. 1: zeigt den Aufbau eines Ausführungsbeispiels der erfindungsgemäßen Vorrichtung,
- Fig. 2: zeigt ein Fahrzeug mit dem Ausführungsbeispiel der erfindungsgemäßen Vorrichtung,
- Fig. 3: zeigt eine projizierte Lichtverteilung einer Vorrichtung des Standes der Technik,
- Fig. 4: zeigt eine projizierte Lichtgrafik des Ausführungsbeispiels der erfindungsgemäßen Vorrichtung,
- Fig. 5: zeigt den Ablauf eines ersten Ausführungsbeispiels des erfindungsgemäßen Verfahrens,
- Fig. 6: zeigt den Ablauf eines zweiten Ausführungsbeispiels des erfindungsgemäßen Verfahrens und
- Fig. 7: zeigt den Ablauf eines dritten Ausführungsbeispiels des erfindungsgemäßen Verfahrens.

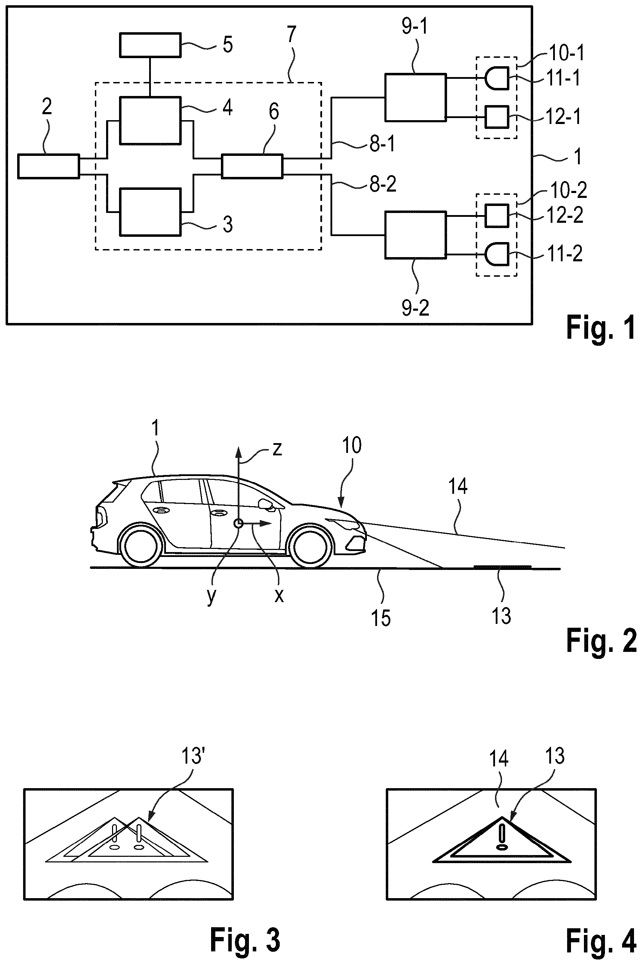

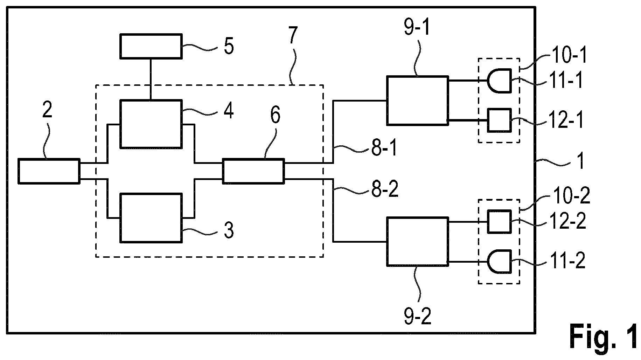

Mit Bezug zu den Figuren 1 und 2 wird das Ausführungsbeispiel der erfindungsgemäßen Vorrichtung erläutert:
Die Vorrichtung ist Teil eines Fahrzeugs 1, welches eine Sensoreinheit 2 umfasst. Die Sensoreinheit 2 umfasst Fahrwerkssensoren, Inertialsensoren und einen Geschwindigkeitsmesser für die Geschwindigkeit des Fahrzeugs 1. Mittels dieser Sensoren kann auf an sich bekannte Weise die Position und Lage (Ausrichtung) des Fahrzeugs im Raum bestimmt werden. Von den Sensoren werden insbesondere Verdrehungen des Fahrzeugs gegenüber einer Standardausrichtung erfasst, bei welcher das Fahrzeug auf einer ebenen horizontal ausgerichteten Fläche steht.

Wie in Fig. 2 gezeigt, ist hierfür in einem Koordinatensystem des Fahrzeugs die x-Achse in Längsrichtung des Fahrzeugs, die y-Achse in Querrichtung des Fahrzeugs und die z-Achse in Richtung der Höhe des Fahrzeugs 1 ausgerichtet. Entsprechend werden Verdrehungen um die x-Achse durch einen Wankwinkel, Verdrehungen um die y-Achse um einen Nickwinkel und Verdrehungen um die z-Achse durch einen Gierwinkel erfasst.

Des Weiteren ist die Sensoreinheit 2 ausgebildet, Umgebungsdaten des Fahrzeugs 1 zu erfassen. Die Umgebungsdaten enthalten zum einen Daten über die Geometrie der Fahrbahn 15 in Fahrtrichtung des Fahrzeugs 1. Zum anderen enthalten die Umgebungsdaten Informationen über Objekte und andere Verkehrsteilnehmer in der Umgebung des Fahrzeugs 1, so dass sich aus den Umgebungsdaten Informationen zu einer aktuellen Verkehrssituation ableiten lassen.

In einem bestimmten Abstand vor dem Fahrzeug 1 soll eine Lichtverteilung 13, z. B. eine Lichtgrafik, auf die Fahrbahn 15 projiziert werden. Mit der Sensoreinheit 2 wird die Geometrie, d. h. die dreidimensionale Form und Positionierung dieses Bereichs der Fahrbahn 15, erfasst. Es wird somit die Ausrichtung der Projektionsfläche erfasst, auf welche die Lichtverteilung 13 projiziert werden soll.

Die Sensoreinheit 2 ist mit einer Prädiktionseinheit 3 datentechnisch verbunden. Die Sensoreinheit 2 überträgt der Prädiktionseinheit 3 mit einer ersten Frequenz Bewegungsdaten und Umgebungsdaten des Fahrzeugs 1. Die Prädiktionseinheit 3 ist ausgebildet, prädizierte Lagedaten aus den von der Sensoreinheit 2 übertragenen Bewegungsdaten und Umgebungsdaten für einen späteren Zeitpunkt zu berechnen. Die Berechnung der prädizierten Lagedaten wird später mit Bezug zu dem Ausführungsbeispiel des erfindungsgemäßen Verfahrens erläutert. Wenn die Bewegungsdaten zu einem ersten Zeitpunkt erfasst werden, geben die prädizierten Lagedaten die Position und die Ausrichtung des Fahrzeugs 1 zu einem späteren zweiten Zeitpunkt an. Das zwischen dem ersten und dem zweiten Zeitpunkt liegende Zeitintervall entspricht dabei dem Zeitintervall, welches zwischen dem Erfassen der Bewegungsdaten und der Projektion einer Lichtverteilung 13 vergeht, welche aus einer gespeicherten Soll-Lichtverteilung erzeugt wurde. Die prädizierten Lagedaten umfassen außerdem translatorische Daten, welche angeben, wie sich das Fahrzeug in x-Richtung, y-Richtung und z-Richtung relativ zu der Position zum ersten Zeitpunkt bewegt hat. Die prädizierten Lagedaten sagen somit voraus, wie sich das Fahrzeug 1 vom ersten Zeitpunkt zum zweiten Zeitpunkt translatorisch und rotatorisch bewegt hat.

Die Sensoreinheit 2 ist ferner mit einer Recheneinheit 4 gekoppelt, welche wiederum mit einem Speicher 5 verbunden ist, in dem die Soll-Lichtverteilung gespeichert ist. In dem Speicher 5 kann eine Vielzahl von Soll-Lichtverteilungen gespeichert sein. Die Auswahl der Soll-Lichtverteilung kann in Abhängigkeit von der jeweiligen Verkehrssituation erfolgen, welche die Recheneinheit 4 aus den Umgebungsdaten ableiten kann. Im Folgenden wird jedoch davon ausgegangen, dass eine bestimmte Soll-Lichtverteilung, die in dem Speicher 5 gespeichert ist, auf die von der Sensoreinheit 2 erfasste Projektionsfläche der Fahrbahn 15 projiziert werden soll.

Aus dieser gespeicherten Soll-Lichtverteilung kann die Recheneinheit 4 Projektionsdaten erzeugen. Das Erzeugen der Projektionsdaten wird auch als Rendering der Lichtverteilung bezeichnet. Dieses Rendering ist sehr rechenaufwendig und zeitintensiv, so dass das Erzeugen der Projektionsdaten länger dauert als das Erfassen der Bewegungsdaten und der Umgebungsdaten mittels der Sensoreinheit 2.

Die Prädiktionseinheit 3 und die Recheneinheit 4 sind mit einer Korrektureinheit 6 datentechnisch gekoppelt, so dass die von der Prädiktionseinheit 3 berechneten prädizierten Lagedaten und die von der Recheneinheit 4 erzeugten Projektionsdaten an die Korrektureinheit 6 übertragen werden können. Die Korrektureinheit 6 ist ausgebildet, die erzeugten Projektionsdaten mittels der prädizierten Lagedaten zu korrigieren. Von der Korrektureinheit 6 werden somit korrigierte Projektionsdaten erzeugt. Von der Korrektureinheit 6 werden die von der Recheneinheit 4 erzeugten Projektionsdaten so verändert, dass die korrigierten Projektionsdaten dieselbe zu projizierende Lichtverteilung 13 an derselben Position der Fahrbahn 15 erzeugen, wie die von der Recheneinheit 4 berechneten Projektionsdaten, wobei jedoch berücksichtigt wird, dass sich die Lage, d. h. die Ausrichtung und Position des Fahrzeugs 1, zum zweiten Zeitpunkt verändert hat, wie es später mit Bezug zu dem Ausführungsbeispiel des erfindungsgemäßen Verfahrens erläutert wird.

Die Bewegungsdaten werden mittels der Sensoreinheit 2 mit einer ersten Frequenz gewonnen, die korrigierten Projektionsdaten werden hingegen mit einer zweiten Frequenz erzeugt, die kleiner als die erste Frequenz ist. Die zweite Frequenz ist insbesondere deswegen kleiner als die erste Frequenz, weil das Rendering der Projektionsdaten mehr Zeit in Anspruch nimmt, als das Erfassen der Bewegungsdaten und der Umgebungsdaten und das Erzeugen der prädizierten Lagedaten.

Der Korrektureinheit 6 werden somit häufiger prädizierte Lagedaten als Projektionsdaten übertragen. Wenn die korrigierten Projektionsdaten mit Bewegungsdaten und Umgebungsdaten erzeugt werden, die zum ersten Zeitpunkt gewonnen wurden, werden der Korrektureinheit 6 für Zwischenzeitpunkte zwischen dem ersten und den zweiten Zeitpunkt aktualisierte prädizierte Lagedaten übertragen. Die Korrektureinheit 6 ist ausgebildet, mittels dieser aktualisierten prädizierten Lagedaten einen Korrekturparameter zu gewinnen, der dann zum Erzeugen aktualisierter korrigierter Projektionsdaten verwendet wird, wie es später mit Bezug zu dem Ausführungsbeispiel des erfindungsgemäßen Verfahrens erläutert wird.

Das Fahrzeug 1 umfasst ferner eine an sich bekannte linke Scheinwerfereinheit 10-1 und eine in Querrichtung davon beabstandete rechte Scheinwerfereinheit 10-2. Die Scheinwerfereinheiten werden auch zusammengefasst mit den Bezugszeichen 10 bezeichnet. Jede der Scheinwerfereinheiten 10 umfasst ein Scheinwerfermodul 11, d. h. ein linkes Scheinwerfermodul 11-1 und ein rechtes Scheinwerfermodul 11-2. Ferner umfasst jede der Scheinwerfereinheiten 10 einen Lichtprojektor 12, d. h. einen linken Lichtprojektor 12-1 und einen rechten Lichtprojektor 12-2. Die Scheinwerfermodule 11 sind ausgebildet, eine Grundlichtfunktion 14 zu erzeugen. Dabei kann es sich beispielsweise um eine Abblendlichtfunktion und/oder eine Fernlichtfunktion handeln. Die Lichtprojektoren 12 sind ausgebildet, eine Lichtverteilung 13, z. B. eine Lichtgraphik, auf die Fahrbahn 15 zu projizieren. Die Scheinwerfermodule 11 und die Lichtprojektoren 12 werden von hochauflösenden Mikropixel-Modulen mit jeweils einer Vielzahl von LEDs gebildet.

Jede Scheinwerfereinheit 10 mit dem Scheinwerfermodul 11 und dem Lichtprojektor 12 wird von jeweils einem Lichtsteuergerät 9, d. h. einem linken Lichtsteuergerät 9-1 und einem rechten Lichtsteuergerät 9-2, angesteuert. Die Korrektureinheit 6 überträgt dem jeweiligen Lichtsteuergerät 9 jeweils Projektionsdaten. Auf Basis dieser Projektionsdaten steuert das Lichtsteuergerät 9 den Lichtprojektor 12 an, um die Lichtverteilung 13 auf der Fahrbahn 15 zu erzeugen. Das linke Lichtsteuergerät 9-1 steuert dabei den linken Lichtprojektor 12-1 und das rechte Lichtsteuergerät 9-2 steuert den rechten Lichtprojektor 12-2 dabei so an, dass die Lichtverteilung 13 von beiden Lichtprojektoren 12 durch Überlagerung erzeugt wird. Die Lichtverteilung wird bei der erfindungsgemäßen Vorrichtung durch die von der Korrektureinheit 6 übertragenen korrigierten Projektionsdaten bzw. den aktualisierten korrigierten Projektionsdaten erzeugt.

Hierfür ist die Korrektureinheit 6 mittels Datenleitungen 8 mit den Lichtsteuergeräten 9 gekoppelt, d. h. eine erste Datenleitung 8-1 überträgt Daten von der Korrektureinheit 6 an das linke Lichtsteuergerät 9-1 und eine zweite Datenleitung 8-2 überträgt Daten von der Korrektureinheit 6 an das rechte Lichtsteuergerät 9-2.

Unabhängig davon steuert das jeweilige Lichtsteuergerät 9 die Scheinwerfermodule 11 zum Erzeugen der Grundlichtfunktion an. Die Lichtsteuergeräte 9 sind dabei ferner ausgebildet, auch die Grundlichtfunktionen zu korrigieren, wie es mit Bezug zu dem Ausführungsbeispiel des erfindungsgemäßen Verfahrens später erläutert wird.

Bei dem Ausführungsbeispiel der erfindungsgemäßen Vorrichtung sind die Prädiktionseinheit 3, die Recheneinheit 4 und die Korrektureinheit 6 in einer zentralen Steuereinheit 7 angeordnet, welche über die Datenleitungen 8 mit den Lichtsteuergeräten 9 gekoppelt ist.

Im Folgenden werden Ausführungsbeispiele des erfindungsgemäßen Verfahrens erläutert, welche durch das vorstehend beschriebene Ausführungsbeispiel der erfindungsgemäßen Vorrichtung ausgeführt wird, wobei weitere Details des Ausführungsbeispiels der erfindungsgemäßen Vorrichtung mit Bezug zu den Ausführungsbeispielen des Verfahrens erläutert werden.

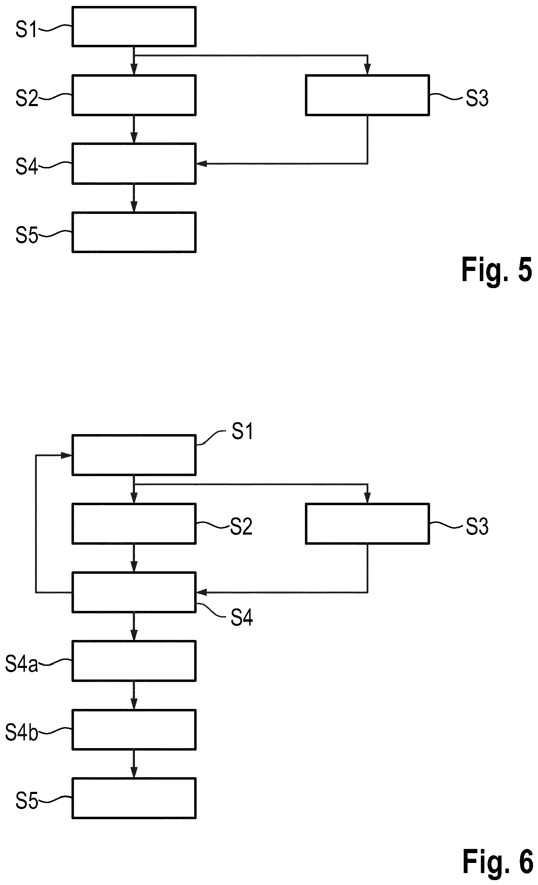

Mit Bezug zu Fig. 5 wird zunächst ein erstes Ausführungsbeispiel des erfindungsgemäßen Verfahrens erläutert:
In einem Schritt S1 werden von der Sensoreinheit 2 zu einem ersten Zeitpunkt Bewegungsdaten des Fahrzeugs 1 und Umgebungsdaten des Fahrzeugs 1 erfasst. Hierfür greift die Sensoreinheit 2 auf Inertialsensoren sowie auch Fahrwerksensoren zurück. Optional wird außerdem auf ein Navigationssystem zugegriffen, um Daten zur Position des Fahrzeugs 1 zu erhalten. Die von der Sensoreinheit 2 erfassten Daten umfassen somit die Position des Fahrzeugs 1 (x-, y-, z-Koordinaten) und die Orientierung bzw. die Ausrichtung des Fahrzeugs 1 im Raum, d. h. die Verdrehwinkel um die x-Achse, y-Achse und z-Achse sowie die Geschwindigkeit des Fahrzeugs 1.

Die Umgebungsdaten umfassen Informationen zum Verlauf der Fahrbahn 15 in Fahrtrichtung sowie Informationen, aus denen sich die aktuelle Verkehrssituation ableiten lässt, d. h. insbesondere Informationen zu Objekten und anderen Verkehrsteilnehmern in Fahrtrichtung. Die Bewegungsdaten und die Umgebungsdaten werden sowohl an die Prädiktionseinheit 3 als auch an die Recheneinheit 4 übertragen.

In einem Schritt S2 werden von der Prädiktionseinheit 3 aus den erfassten Bewegungsdaten und den erfassten Umgebungsdaten prädizierte Lagedaten für eine späteren zweiten Zeitpunkt berechnet. Die Prädiktion kann mit einem bekannten Standard-Verfahren berechnet werden, das z. B. Kalman-Filter oder eine einfache lineare oder quadratische Extrapolation verwendet.

Der zweite Zeitpunkt wird dabei aus dem ersten Zeitpunkt so berechnet, dass das Zeitintervall zwischen dem ersten und dem zweiten Zeitpunkt die Zeit zwischen dem Erfassen der Bewegungs- und Umgebungsdaten einerseits und der Projektion der Lichtverteilung mittels des Lichtprojektors andererseits ist. Dieses Zeitintervall kann dynamisch berechnet werden. Im vorliegenden Ausführungsbeispiel ist der Wert dieses Zeitintervalls jedoch in der Prädiktionseinheit 3 gespeichert.

Aus den Umgebungsdaten wird von der Prädiktionseinheit 3 zum einen die Geometrie des Fahrbahnverlaufs analysiert. Anhand der Geschwindigkeit des Fahrzeugs 1, welche der Prädiktionseinheit 3 auch von der Sensoreinheit 2 übertragen wird, wird berechnet, wo sich das Fahrzeug voraussichtlich zu dem zweiten Zeitpunkt auf der Fahrbahn 15 befindet. Hierbei kann auch die Neigung der Fahrbahn 15 in Fahrtrichtung berücksichtigt werden, da eine Veränderung der Neigung voraussichtlich zu Geschwindigkeitsänderungen führt. Ferner wird bei dem beschriebenen Ausführungsbeispiel optional vorhergesagt, ob sich die Position des Fahrzeugs 1 auf der Fahrbahn 15 zum zweiten Zeitpunkt voraussichtlich durch Fahrmanöver ändert. Ergibt sich aus der Verkehrssituation beispielsweise, dass das Fahrzeug 1 voraussichtlich positiv beschleunigt oder abgebremst wird, wird eine solche Geschwindigkeitsänderung bei der Berechnung der voraussichtlichen Position auf der Fahrbahn 15 zum zweiten Zeitpunkt berücksichtigt.

Aus der Geometrie der Fahrbahn 15 bei der Position, bei welcher sich das Fahrzeug 1 voraussichtlich zum zweiten Zeitpunkt befindet, wird des Weiteren die voraussichtliche Ausrichtung des Fahrzeugs 1 zum zweiten Zeitpunkt berechnet. Hierbei werden insbesondere Neigungen in allen drei Raumrichtungen der Fahrbahn 15 bei der Position, bei welcher sich das Fahrzeug 1 voraussichtlich zum zweiten Zeitpunkt befindet, berücksichtigt. Insbesondere eine Neigung der Fahrbahn 15 in Fahrtrichtung führt zu einem Schwenkwinkel des Fahrzeugs um die Querachse, d. h. die y-Achse. Bei der Berechnung der Winkel für die Verdrehungen des Fahrzeugs 1 um die drei Raumachsen werden außerdem vorhergesagte Fahrmanöver berücksichtigt, welche aus der Analyse der Umgebungsdaten und der sich daraus ergebenden Verkehrssituation bestimmt wurden. Wenn durch solche Fahrmanöver Kräfte auf das Fahrzeug 1 wirken, können diese Kräfte dazu führen, dass sich nicht nur die Position des Fahrzeugs 1 zum zweiten Zeitpunkt ändert, sondern auch die Verdrehungen des Fahrzeugs 1 in den drei Raumrichtungen. Ein voraussichtliches Bremsmanöver führt somit beispielsweise zu einem Schwenkwinkel um die y-Achse. Auch solche vorhergesagten Fahrmanöver werden bei der Berechnung der prädizierten Lagedaten für den zweiten Zeitpunkt im Schritt S2 berücksichtigt.

In einem Schritt S3 werden gleichzeitig zu dem Schritt S2 in der Recheneinheit 4 Projektionsdaten für den Lichtprojektor 12 aus einer gespeicherten Soll-Lichtverteilung erzeugt. Die Soll-Lichtverteilung wird dabei aus dem Speicher 5 ausgelesen. Gegebenenfalls wird eine geeignete Soll-Lichtverteilung in Abhängigkeit von einer Verkehrssituation ausgewählt, die mittels der Umgebungsdaten bestimmt worden ist. Bei der Soll-Lichtverteilung handelt es sich bei diesem Ausführungsbeispiel um eine Lichtgrafik mit einem Dreieck mit einem Ausrufezeichen, welche als dunkler Bereich innerhalb einer Grundlichtfunktion, wie beispielsweise einem Abblendlicht, erscheint. Die projizierte Lichtverteilung 13 dieser Lichtgrafik ist in Fig. 4 gezeigt. In Fig. 3 ist zum Vergleich die projizierte Lichtverteilung 13' dieser Lichtgrafik gezeigt, die von einem herkömmlichen Verfahren ohne Prädiktion der Lage des Fahrzeugs 1 zum Zeitpunkt der Lichtemission erzeugt wurde. In diesem Fall ergeben sich Doppelbilder der Lichtgraphik aufgrund der nicht deckungsgleichen Projektionen des rechten und linken Lichtprojektors.

Die im Schritt S2 berechneten prädizierten Lagedaten und die im Schritt S3 erzeugten Projektionsdaten werden an die Korrektureinheit 6 übertragen. Im Schritt S4 korrigiert die Korrektureinheit 6 die erzeugten Projektionsdaten mittels der prädizierten Lagedaten, so dass korrigierte Projektionsdaten erzeugt werden. Bei dieser Korrektur wird berücksichtigt, dass sich zum zweiten Zeitpunkt das Fahrzeug 1 voraussichtlich nicht in einer horizontalen Standardausrichtung befindet, sondern aufgrund der Geometrie der Fahrbahn 5 und/oder aufgrund von vorhergesagten Fahrmanövern Abweichungen von dieser Ausrichtung auftreten. Etwaige Schwenkwinkel im Raum, durch welche das Fahrzeug zum zweiten Zeitpunkt von der Standardausrichtung abweicht, werden bei der Korrektur der Projektionsdaten berücksichtigt.

Da die relative Lage des Lichtprojektors 12 in dem Fahrzeug 1 bekannt und unveränderlich ist, kann aus den prädizierten Lagedaten eine prädizierte Orientierung des Lichtprojektors 12 berechnet werden. Die Projektionsdaten werden dann mittels der prädizierten Orientierung des Lichtprojektors 12 korrigiert.

Anhand der prädizierten Position des Fahrzeugs 1 zum zweiten Zeitpunkt und anhand der Geometrie der Fahrbahn 15 in Fahrtrichtung, welche aus den Umgebungsdaten berechnet wird, wird in Schritt S3 außerdem die Geometrie des Bereichs der Fahrbahn 15 berechnet, auf welchen die Lichtverteilung 13 projiziert werden soll. Die Korrektureinheit 6 passt die Projektionsdaten nun so an, dass sie in Abhängigkeit von der Geometrie des Bereichs der Fahrbahn 15, auf den die Lichtverteilung 13 projiziert werden soll, perspektivisch so verzerrt werden, dass die Soll-Lichtverteilung unverzerrt auf die Projektionsfläche projiziert werden kann. Durch die perspektivische Verzerrung der Projektionsdaten werden somit Abweichungen von einer ebenen Projektionsfläche bereits bei der Berechnung der korrigierten Projektionsdaten ausgeglichen.

Diese korrigierte Projektionsdaten beinhalten eine perspektivische Verzerrung, welche die Geometrie der Projektionsfläche berücksichtigt, so dass die Soll-Lichtverteilung unter der Annahme, dass sich das Fahrzeug 1 in der Standardausrichtung befindet, unverzerrt auf die Projektionsfläche projiziert werden kann.

Durch die in Schritt S4 erzeugten korrigierten Projektionsdaten wird eine projizierte Lichtverteilung 13 erzeugt, die einer Lichtverteilung entspricht, welche den von den im Schritt S2 erzeugten Projektionsdaten entspricht, wenn sich das Fahrzeug 1 in der Standardausrichtung befindet, d. h. die Schwenkwinkel des Fahrzeugs 1 im Raum Null sind.

Die korrigierten Projektionsdaten werden über die Datenleitungen 8-1 und 8-2 an die Lichtsteuergeräte 9-1 und 9-2 übertragen.

In einem Schritt S5 erzeugen die Lichtsteuergeräte 9-1 und 9-2 aus den korrigierten Projektionsdaten Steuerdaten für die Scheinwerfermodule 11-1 und 11-2 sowie die Lichtprojektoren 12-1 und 12-2. Durch die Lichtemission der Scheinwerfermodule 11 und der Lichtprojektoren 12 wird zum einen eine Lichtverteilung einer Grundlichtfunktion 14 sowie andererseits die projizierte Lichtverteilung 13 durch Überlagerung der Lichtemissionen der beiden Lichtprojektoren 12-1 und 12-2 erzeugt.

Mit Bezug zu Fig. 6 wird ein zweites Ausführungsbeispiel des erfindungsgemäßen Verfahrens beschrieben. Dabei wird nur auf die Unterschiede zu dem Verfahren des ersten Ausführungsbeispiels eingegangen. Die restlichen Verfahrensschritte entsprechen den jeweiligen Verfahrensschritten des ersten Ausführungsbeispiels.

Bei dem zweiten Ausführungsbeispiel werden die Bewegungsdaten und die Umgebungsdaten mit einer ersten Frequenz gewonnen und die korrigierten Projektionsdaten mit einer zweiten Frequenz gewonnen. Die erste Frequenz ist dabei größer als die zweite Frequenz, d. h. die Bewegungs- und Umgebungsdaten werden häufiger gewonnen als die korrigierten Projektionsdaten. Die erste Frequenz, welche als *"Rendering-Frequenz"* bezeichnet wird, ist beispielsweise 60 Hz. Die zweite Frequenz entspricht im Wesentlichen einer Echtzeiterfassung der Lage- und Umgebungsdaten. Sie ist beispielsweise 600 Hz.

Nachdem in Schritt S4 die korrigierten Projektionsdaten gewonnen wurden, werden diese zum einen an die Lichtsteuergeräte 9 übertragen. Ferner führt das Verfahren zum Schritt S1 zurück, und es werden erneut Bewegungsdaten und Umgebungsdaten des Fahrzeugs 1 erfasst, im Schritt S2 daraus prädizierte Lagedaten für den späteren zweiten Zeitpunkt berechnet und die prädizierten Lagedaten an die Korrektureinheit 6 übertragen.

Zu diesem Zwischenzeitpunkt sind von der Recheneinheit 4 im Schritt S3 noch keine neuen Projektionsdaten erzeugt worden. Es liegen in der Korrektureinheit 6 somit aktualisierte prädizierte Lagedaten für den zweiten Zeitpunkt vor. Beim Erzeugen der aktualisierten prädizierten Lagedaten wird dabei berücksichtigt, dass weiterhin davon ausgegangen wird, dass die Projektion der Lichtverteilung 13 zu demselben Zeitpunkt erfolgen wird, welcher bei der vorherigen Berechnung der korrigierten Projektionsdaten auf Basis von zuvor erfassten Bewegungs- und Umgebungsdaten erzeugt worden sind.

In einem Schritt S4a wird nun aus der Abweichung der aktualisierten prädizierten Lagedaten von den prädizierten Lagedaten der vorherigen Erfassung der Bewegungs- und Umgebungsdaten ein Korrekturparameter für die Projektionsdaten berechnet. Dieser Korrekturparameter kann beispielsweise ein Offset-Wert für eine vertikale Verschiebung der Lichtverteilung 13 sein, wenn eine Verschwenkung des Fahrzeugs 1 um die y-Achse betrachtet wird. Der Korrekturparameter wird über die Datenleitungen 8-1 und 8-2 an die Lichtsteuergeräte 9-1 und 9-2 übertragen. Diese wenden den Korrekturparameter in Schritt S4b auf die bereits vorliegenden korrigierten Projektionsdaten an, wodurch aktualisierte korrigierte Projektionsdaten berechnet werden.

In Schritt S5 projiziert dann der Lichtprojektor 12 zum zweiten Zeitpunkt auf Basis der aktualisierten korrigierten Projektionsdaten die Lichtverteilung 13 auf die Fahrbahn 15.

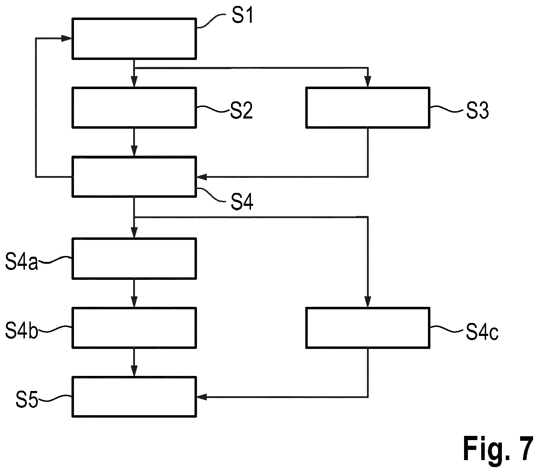

Mit Bezug zu Fig. 7 wird ein drittes Ausführungsbeispiel des erfindungsgemäßen Verfahrens beschrieben. Es wird im Folgenden nur auf die Unterschiede zu dem Verfahren des zweiten Ausführungsbeispiels eingegangen.

In einem Schritt S4c wird parallel zum Schritt S4a des zweiten Ausführungsbeispiels mittels des Korrekturparameters auch für die Grundlichtfunktion eine korrigierte Grundlichtfunktion berechnet. Die Korrektur der Grundlichtfunktion kann dabei analog zu der Korrektur bei der Berechnung der aktualisierten korrigierten Projektionsdaten erfolgen, indem beispielsweise eine vertikale Bildverschiebung erzeugt wird. Die korrigierte Grundlichtfunktion kann jedoch auch auf andere Weise mittels des Korrekturparameters erzeugt werden. Beispielsweise kann die vertikale Bildverschiebung der Grundlichtfunktion sich von der vertikalen Verschiebung, welche die Lichtprojektion 13 erfährt, unterscheiden.

In Schritt S5 wird dann die korrigierte Grundlichtfunktion zusammen mit einer Lichtverteilung 13 emittiert, welche auf den aktualisierten korrigierten Projektionsdaten basiert.

### Bezugszeichenliste

- 1: Fahrzeug
- 2: Sensoreinheit
- 3: Prädiktionseinheit
- 4: Recheneinheit
- 5: Speicher
- 6: Korrektureinheit
- 7: zentrales Steuergerät
- 8: Datenleitung
- 8-1: erste Datenleitung
- 8-2: zweite Datenleitung
- 9: Lichtsteuergerät
- 9-1: linkes Lichtsteuergerät
- 9-2: rechtes Lichtsteuergerät
- 10: Scheinwerfereinheit
- 10-1: linke Scheinwerfereinheit
- 10-2: rechte Scheinwerfereinheit I
- 11: Scheinwerfermodul
- 11-1: linkes Scheinwerfermodul
- 11-2: rechtes Scheinwerfermodul
- 12: Lichtprojektor
- 12-1: linker Lichtprojektor
- 12-2: rechter Lichtprojektor
- 13: Lichtverteilung
- 14: Grundlichtfunktion
- 15: Fahrbahn

## Patentansprüche

1. Verfahren zur Projektion einer Lichtverteilung in die Umgebung eines Fahrzeugs (1), bei dem
zu einem ersten Zeitpunkt Bewegungsdaten des Fahrzeugs (1) und/oder Umgebungsdaten des Fahrzeugs (1) erfasst werden,
aus den erfassten Bewegungsdaten und/oder den erfassten Umgebungsdaten prädizierte Lagedaten für einen späteren zweiten Zeitpunkt berechnet werden,
aus einer gespeicherten Soll-Lichtverteilung Projektionsdaten für einen Lichtprojektor (12) erzeugt werden,
die erzeugten Projektionsdaten mittels der prädizierten Lagedaten korrigiert werden, so dass korrigierte Projektionsdaten erzeugt werden,
der Lichtprojektor (12) zum zweiten Zeitpunkt auf Basis der korrigierten Projektionsdaten eine Lichtverteilung in die Umgebung des Fahrzeugs (1) projiziert.

2. Verfahren nach Anspruch 1,
**dadurch gekennzeichnet, dass**
der zweite Zeitpunkt der Zeitpunkt ist, zu dem die die Lichtverteilung mit denjenigen korrigierten Projektionsdaten projiziert wird, die mittels der zum ersten Zeitpunkt erfassten Bewegungsdaten und/oder Umgebungsdaten berechnet wurden.

3. Verfahren nach Anspruch 1 oder 2,
**dadurch gekennzeichnet, dass**
dass bei der Berechnung der prädizierten Lagedaten die Position des Fahrzeugs (1) zu dem zweiten Zeitpunkt berechnet wird.

4. Verfahren nach einem der vorhergehenden Ansprüche,
**dadurch gekennzeichnet, dass**
die Bewegungsdaten und/oder die Umgebungsdaten mit einer ersten Frequenz gewonnen werden und die korrigierten Projektionsdaten mit einer zweiten Frequenz erzeugt werden, wobei die erste Frequenz größer als die zweite Frequenz ist,
bis zum Erzeugen der korrigierten Projektionsdaten zu einem Zwischenzeitpunkt, der zwischen dem ersten und dem zweiten Zeitpunkt liegt, aktualisierte Bewegungsdaten des Fahrzeugs (1) und/oder aktualisierte Umgebungsdaten des Fahrzeugs (1) erfasst werden, aus den aktualisierten Bewegungsdaten und/oder den aktualisierten Umgebungsdaten aktualisierte prädizierte Lagedaten für den späteren zweiten Zeitpunkt berechnet werden, aus der Abweichung der aktualisierten prädizierten Lagedaten von den prädizierten Lagedaten ein Korrekturparameter für die Projektionsdaten berechnet wird,
vor der Projektion der Lichtverteilung aus den korrigierten Projektionsdaten und dem Korrekturparameter aktualisierte korrigierte Projektionsdaten berechnet werden und der Lichtprojektor (12) zum zweiten Zeitpunkt auf Basis der aktualisierten korrigierten Projektionsdaten die Lichtverteilung in die Umgebung des Fahrzeugs (1) projiziert.

5. Verfahren nach Anspruch 4,
**dadurch gekennzeichnet, dass**
die korrigierten Projektionsdaten über eine Datenleitung (8) an ein Lichtsteuergerät (9) des Lichtprojektors (12) übertragen werden,
vor der Projektion der korrigierten Projektionsdaten der Korrekturparameter an das Lichtsteuergerät (9) übertragen wird,
das Lichtsteuergerät (9) die aktualisierten korrigierten Projektionsdaten berechnet und den Lichtprojektor (12) auf Basis der aktualisierten korrigierten Projektionsdaten ansteuert.

6. Verfahren nach einem der vorhergehenden Ansprüche,
**dadurch gekennzeichnet, dass**
zusätzlich zu der von dem Lichtprojektor (12) projizierten Lichtverteilung eine Grundlichtfunktion mittels eines Scheinwerfermoduls (11) erzeugt wird, die der projizierten Lichtverteilung überlagert ist.

7. Verfahren nach Anspruch 6, insofern als dass dieser auf Anspruch 4 rückbezogen ist,
**dadurch gekennzeichnet, dass**
für die Grundlichtfunktion mittels des Korrekturparameters eine korrigierte Grundlichtfunktion berechnet wird und das Scheinwerfermodul (11) zum zweiten Zeitpunkt die korrigierte Grundlichtfunktion emittiert.

8. Verfahren nach einem der vorhergehenden Ansprüche,
**dadurch gekennzeichnet, dass**
die prädizierten Lagedaten einen prädizierten Schwenkwinkel des Fahrzeugs (1) um die Querachse zu dem späteren zweiten Zeitpunkt umfassen.

9. Verfahren nach einem der vorhergehenden Ansprüche,
**dadurch gekennzeichnet, dass**
die Ausrichtung einer Projektionsfläche erfasst wird, auf welche die Lichtverteilung zu projizieren ist und beim Erzeugen der korrigierten Projektionsdaten aus der Soll-Lichtverteilung eine perspektivische Verzerrung der Projektionsdaten realisiert wird, um die Soll-Lichtverteilung unverzerrt auf die Projektionsfläche zu projizieren.

10. Vorrichtung zur Projektion einer Lichtverteilung in die Umgebung eines Fahrzeugs (1) mit einer Sensoreinheit, die ausgebildet ist, Bewegungsdaten des Fahrzeugs (1) und/oder Umgebungsdaten des Fahrzeugs (1) zu einem ersten Zeitpunkt zu erfassen, einem Speicher (5) zum Speichern einer Soll-Lichtverteilung,
einer Recheneinheit (4) zum Erzeugen von Projektionsdaten aus der gespeicherten Soll-Lichtverteilung und
einem Lichtprojektor (12), der ausgebildet ist, eine Lichtverteilung in die Umgebung des Fahrzeugs (1) zu projizieren,
**dadurch gekennzeichnet, dass**
die Vorrichtung eine mit der Sensoreinheit gekoppelte Prädiktionseinheit (3) aufweist, die ausgebildet ist, prädizierte Lagedaten für einen späteren zweiten Zeitpunkt aus den erfassten Bewegungsdaten und/oder den erfassten Umgebungsdaten zu berechnen, und eine mit der Recheneinheit (4) und der Prädiktionseinheit (3) gekoppelte Korrektureinheit (6) aufweist, die ausgebildet ist, die erzeugten Projektionsdaten mittels der prädizierten Lagedaten zu korrigieren, so dass korrigierte Projektionsdaten erzeugt werden,
wobei der Lichtprojektor (12) ausgebildet ist, zum zweiten Zeitpunkt auf Basis der korrigierten Projektionsdaten die Lichtverteilung in die Umgebung des Fahrzeugs (1) zu projizieren.

11. Vorrichtung nach Anspruch 10,
**dadurch gekennzeichnet, dass**
die Korrektureinheit (6) ausgebildet ist, die Projektionsdaten mit einer zweiten Frequenz zu erzeugen, und die Sensoreinheit (2) ausgebildet ist, Bewegungsdaten mit einer ersten Frequenz zu gewinnen, wobei die erste Frequenz größer als die zweite Frequenz ist, und bis zum Erzeugen der korrigierten Projektionsdaten zu einem Zwischenzeitpunkt, der zwischen dem ersten und dem zweiten Zeitpunkt liegt, aktualisierte Bewegungsdaten des Fahrzeugs (1) und/oder aktualisierte Umgebungsdaten des Fahrzeugs (1) zu erfassen,
die Prädiktionseinheit (3) ausgebildet ist, aus den aktualisierten Bewegungsdaten und/oder den aktualisierten Umgebungsdaten aktualisierte prädizierte Lagedaten für den späteren zweiten Zeitpunkt zu berechnen,
die Korrektureinheit (6) ausgebildet ist, aus der Abweichung der aktualisierten prädizierten Lagedaten von den prädizierten Lagedaten einen Korrekturparameter für die Projektionsdaten zu berechnen,
vor der Projektion der Lichtverteilung aus den korrigierten Projektionsdaten und dem Korrekturparameter aktualisierte korrigierte Projektionsdaten berechenbar sind und
der Lichtprojektor (12) ausgebildet ist, zum zweiten Zeitpunkt auf Basis der aktualisierten korrigierten Projektionsdaten eine Lichtverteilung in die Umgebung des Fahrzeugs (1) zu projizieren.

12. Vorrichtung nach Anspruch 11,
**dadurch gekennzeichnet, dass**
bei dem Lichtprojektor (12) ein Lichtsteuergerät (9) angeordnet ist, welches ausgebildet ist, eine oder mehrere Lichtquellen des Lichtprojektors (12) anzusteuern,
die Prädiktionseinheit (3), die Recheneinheit (4) und die Korrektureinheit (6) in einer zentralen Steuereinheit (7) angeordnet sind, die über eine Datenleitung (8) mit dem Lichtsteuergerät (9) gekoppelt ist,
das Lichtsteuergerät (9) ausgebildet ist, die aktualisierten korrigierten Projektionsdaten zu berechnen und an die eine oder die mehreren Lichtquellen des Lichtprojektors (12) zu übertragen.

13. Fahrzeug (1) mit zwei Scheinwerfereinheiten (10), die jeweils ein Scheinwerfermodul (11) und eine Vorrichtung nach einem der Ansprüche 10 bis 12 umfassen.

14. Fahrzeug (1) nach Anspruch 13,
**dadurch gekennzeichnet, dass**
die Scheinwerfereinheiten (10) in Querrichtung beabstandet voneinander angeordnet sind und die Lichtprojektoren (12) der zwei Scheinwerfereinheiten (10) ausgebildet sind, die projizierte Lichtverteilung durch Überlagerung der Lichtemissionen der beiden Lichtprojektoren (12) zu erzeugen.
